# EUROPEAN PATENT APPLICATION

(11) **EP 4 467 921 A1**
(43) Date of publication of application: **27.11.2024**
(21) Application number: 23187053.6
(22) Date of filing: 21.07.2023
(51) Int. Cl.: G01B 11/02, G01B 11/06

(54) **FOOD PREPARATION APPARATUS WITH FOOD THICKNESS DETERMINATION**

(30) Priority: 23.05.2023 WO PCT/CN2023/096824
(71) Applicant: Versuni Holding B.V., 5656 AE Eindhoven (NL)
(72) Inventor: TAN, Jingwei, 5656 AE Eindhoven (NL)
(74) Representative: Vollering, Stefanus Franciscus Maria

(57) **Abstract**

Provided is a food preparation apparatus (100) comprising a food supporting region (102) on which a piece of food (104) is supportable, and an image sensor (107) arranged to image the food supporting region from above the food supporting region at an angle that enables image capture of a top surface (108) and a side surface (110) of the piece of food. A lighting system (112A, 112B) provides a first illumination condition (114) in which the food supporting region is illuminated by the lighting system from a first direction, and a second illumination condition (116) in which the food supporting region is illuminated by the lighting system from a second direction that is different from the first direction. A processing system (118) receives first image data captured by the image sensor when the lighting system is providing the first illumination condition, and receives second image data captured by the image sensor when the lighting system is providing the second illumination condition. The processing system processes the first image data and the second image data to identify a first edge (120) of the piece of food between the top surface and the side surface, and a second edge (122) between the side surface and the food supporting region. The identified first and second edges can then be used to determine a thickness of the piece of food. Further provided is a method for determining a thickness of a piece of food and a related computer program.

## Description

### FIELD OF THE INVENTION

The invention relates to a food preparation apparatus comprising a processing system configured to determine food piece thickness based on image data received from an image sensor. The invention further relates to a method for determining food piece thickness and an associated computer program.

### BACKGROUND OF THE INVENTION

Food preparation apparatuses, e.g. cooking devices such as ovens and air fryers, that include integrated cameras can provide enhanced control functionality and improved user experience.

Machine vision provided by such cameras can be comparable or superior to human vision, and can thus assist with monitoring and supervising food during a food preparation process, such as a cooking process. This can lead to consumers expecting camera-comprising food preparation apparatuses to have chef-like capabilities.

When preparing, e.g. roasting, food the thickness of the pieces of food is taken into account. This can be important when cooking, for instance, a beef steak or a salmon steak. However, there may be significant variation in food piece thickness. Some types of food have relatively large thicknesses, such as about 2 cm, or even about 4 cm, while others may have smaller thicknesses, such as less than 1 cm. Such differences in thickness can have a significant effect on preparation time, e.g. roasting time.

Recipes tend to provide guidance concerning cooking temperature and time based on a common or typical piece of food, e.g. steak, but also provide a reminder to the consumer to adjust the cooking time according to the actual thickness of the piece of food being cooked.

However, it may be challenging for the consumer to judge with sufficient accuracy the thickness of the piece of food by eye. Whilst the consumer could measure the thickness with a ruler, measuring a raw piece of food in this manner may be inconvenient and unpleasant for the consumer to perform each time they wish to cook the recipe.

It would be desirable for camera-comprising food preparation apparatuses to provide a robust way of estimating the thickness of a piece of food with minimal inconvenience to the consumer.

### SUMMARY OF THE INVENTION

The invention is defined by the claims.

According to examples in accordance with an aspect of the invention, there is provided a food preparation apparatus comprising: a food supporting region on which a piece of food is supportable; an image sensor arranged to image the food supporting region from above the food supporting region at an angle that enables image capture of a top surface and a side surface of the piece of food; a lighting system configured to provide a first illumination condition in which the food supporting region is illuminated by the lighting system from a first direction, and a second illumination condition in which the food supporting region is illuminated by the lighting system from a second direction that is different from the first direction; and a processing system configured to: receive first image data captured by the image sensor when the lighting system is providing the first illumination condition; receive second image data captured by the image sensor when the lighting system is providing the second illumination condition; process the first image data and the second image data to identify a first edge of the piece of food between the top surface and the side surface, and a second edge between the side surface and the food supporting region; and determine, using the identified first and second edges, a thickness of the piece of food.

The processing system processes first image data captured when a first illumination condition is provided by a lighting system and second image data captured when a second illumination condition is provided by the lighting system to identify first and second edges delimiting an image sensor-facing side surface of the piece of food.

Once identified, the first and second edges are used to determine the thickness of the piece of food. This may be implemented in any suitable manner, for example via a pixel count between respective points, e.g. opposing points, on the identified first and second edges.

By the food supporting region being illuminated from different directions depending on which of the first lighting condition and the second lighting condition is being provided by the lighting system, identification of the first and second edges can be facilitated.

This may be due to the different illumination directions providing contrast differences between image areas corresponding to the top surface of the piece of food, the side surface of the piece of food, and/or region(s) of the food supporting region neighboring the piece of food.

Less reliance may be placed on, for example, color difference between the top surface and the side surface of the piece of food for identification of the first edge. This may assist to make the first edge identification relatively insensitive to food piece type.

The identification of the first and second edges being facilitated by the first and second illumination conditions may mean that the determination of the thickness of the piece of food, using these identified edges, is correspondingly assisted.

In some embodiments, the lighting system is configured to provide downlighting onto the food supporting region from above the food supporting region when providing the first illumination condition.

Thus, the lighting system may be configured to provide more illumination of the top surface than the side surface of the piece of food when the first illumination condition is provided.

This may assist identification of the first edge of the piece of food because of the relatively high contrast between the area of the image corresponding to the top surface and the area of the image corresponding to the side surface.

Alternatively or additionally, a greater difference in illumination between the top surface and the side surface of the piece of food may be exhibited when the first illumination condition is provided than when the second illumination condition is provided.

It is noted that the first illumination condition, and thus the first image data, may be employed, in particular, for identification of the first edge of the piece of food.

In some embodiments, the lighting system is configured to provide the downlighting from above a center of the food supporting region or rearwards of the center away from the image sensor. This may result in a shadow of the piece of food increasing contrast between image areas corresponding to the top surface and the side surface of the piece of food. Thus, identification of the first edge of the piece of food may be facilitated.

In such embodiments, the downlighting may be angled such that light is cast across the food supporting region towards a front of the food supporting region from at or proximal to a rear of the food supporting region. Alternatively, the downlighting may be from above the center of the food supporting region.

In some embodiments, the lighting system is configured to provide frontlighting of the food supporting region from at or proximal to the front of the food supporting region where the image sensor is arranged when providing the second illumination condition. Whilst the above-described downlighting may assist identification of the first edge of the piece of food, the shadow of the piece of food resulting from such downlighting can make the second edge between the side surface and the food supporting region more difficult to identify. This issue may be alleviated by the frontlighting of the food supporting region, since the second edge may be less or not obscured by shadow.

It is noted, more generally, that the second illumination condition, and thus the second image data, may be employed, in particular, for identification of the second edge.

In some embodiments, the lighting system is configured to provide the frontlighting from above the food supporting region, in other words from above as well as from at or proximal to the front of the food supporting region. The frontlighting may thus be angled such that light is cast downwardly and partly across the food supporting region towards the rear of the food supporting region. This angled frontlighting may facilitate identification of the second edge.

In some embodiments, the lighting system comprises a first lighting device arranged to provide the first illumination condition, and a second lighting device arranged to provide the second illumination condition, with the first and second lighting devices being distinct from one another.

Such distinct/separate lighting devices may provide a relatively simple way of implementing the first and second illumination conditions provided by the lighting system.

In other embodiments, the lighting system may comprise a movable lighting device, e.g. a single movable lighting device, whose position relative to the food supporting region is adjustable to provide either the first illumination condition or the second illumination condition.

In some embodiments, the food preparation apparatus comprises a camera assembly that includes the image sensor and the second lighting device. Such a camera assembly may facilitate mounting of the image sensor and the second lighting device, for example such that the second lighting device can provide the frontlighting of the food supporting region.

In such embodiments, the image sensor and the second lighting device may be arranged adjacent to each other in the camera assembly, for example arranged adjacent to each other when integrated in a housing of the camera assembly.

In some embodiments, the processing system is configured such that the processing of the first image data and the second image data comprises identifying an outer profile of the piece of food. In such embodiments, the outer profile of the piece of food may be determined, e.g. via image segmentation, using the second image data captured when the lighting system is providing the second illumination condition, for example the frontlighting of the food supporting region.

In some embodiments, the processing system is configured such that the processing of the first image data and the second image data comprises identifying a profile of the top surface of the piece of food. In such embodiments, the profile of the top surface may be determined, e.g. via image segmentation, using the first image data captured when the lighting system is providing the first illumination condition, for example the downlighting of the food supporting region.

In some embodiments, the processing system is configured to compare the outer profile of the piece of food and the profile of the top surface of the piece of food when determining the thickness of the piece of food. In such embodiments, the comparing may comprise determining a side surface image segment corresponding to the side surface. Alternatively or additionally, the comparing may comprise determining a difference between a coordinate of the profile of the top surface and a coordinate of the outer profile of the piece of food.

In some embodiments, the determining the thickness of the piece of food comprises determining a difference between a bottom y-coordinate of the outer profile of the piece of food and a bottom y-coordinate of the profile of the top surface of the piece of food.

In some embodiments, the processing system is configured to obtain a distance along the food supporting region from beneath the image sensor to the side surface, and determine, using the identified first and second edges and the distance, the thickness of the piece of food.

The distance from beneath the image sensor to the side surface, e.g. to the second edge or the first edge or to a point midway between the first and second edges, may be used to correct a measurement of a spacing, e.g. using a pixel count, between respective points on the identified first and second edges for the perspective/angle of the image sensor. Thus, a more accurate determination of the thickness of the piece of food may be attainable.

In some embodiments, the processing system is configured such that the determining the thickness of the piece of food comprises performing a perspective correction transformation function to transform a measurement of a spacing between respective points on the identified first and second edges to the thickness of the piece of food, with the perspective correction transformation accounting for the distance from beneath the image sensor to the side surface.

In some embodiments, the processing system is configured such that processing of the first image data and the second image data comprises pre-processing the first image data and/or the second image data, with this pre-processing comprising one or more of: removing extraneous image data; converting into a color space; and splitting into color channels followed by selecting color channel(s) from which the first edge and the second edge are to be identified.

In some embodiments, the food supporting region comprises a rotatable food support on which the piece of food is supportable, with rotation of the rotatable food support enabling selection of the side surface of the piece of food that is imaged by the image sensor. This may, for example, enable selection of a side surface that is suitable, e.g. most representative of the piece of food in terms of its thickness, for the thickness determination.

In some embodiments, the processing system is configured to control rotation of the food support to select the side surface of the piece of food that is imaged by the image sensor.

Alternatively or additionally, the processing system may be configured to determine a plurality of thicknesses of the piece of food, with each of the plurality of thicknesses corresponding to a side surface selected by rotation of the food support.

The processing system may be configured to generate process control data for controlling food preparation functionality of the food preparation apparatus based on the determined thickness, for example based on the determined plurality of thicknesses.

In some embodiments, the processing system is configured to control heating element(s) included in the food preparation apparatus based on the determined thickness, for example based on the determined plurality of thicknesses, of the piece of food.

Such heating element(s) control may, for instance, determine a cooking temperature, e.g. in a food preparation chamber of the food preparation apparatus, and/or a cooking time for the piece of food.

More generally, the food preparation apparatus may be of any suitable type. Particular mention is made of the food preparation apparatus comprising a domestic kitchen appliance, such as a domestic cooking appliance.

Non-limiting examples of a domestic cooking appliance include an oven, e.g. a convection oven, and an air fryer.

According to another aspect there is provided a method for determining a thickness of a piece of food supported on a food supporting region illuminated by a lighting system that provides a first illumination condition in which the food supporting region is illuminated by the lighting system from a first direction, and a second illumination condition in which the food supporting region is illuminated by the lighting system from a second direction that is different from the first direction, the method comprising: receiving first image data captured by an image sensor when the lighting system is providing the first illumination condition, with the image sensor being arranged for image capture of a top surface and a side surface of the piece of food; receiving second image data from the image sensor when the lighting system is providing the second illumination condition; processing the first image data and the second image data to identify a first edge of the piece of food between the top surface and the side surface, and a second edge between the side surface and the food supporting region; and determining, using the identified first and second edges, the thickness of the piece of food.

According to yet another aspect there is provided a computer program comprising computer program code which is configured, when said computer program is run on a processing system, to cause said processing system to implement the method according to any of the embodiments described herein.

One or more non-transitory computer readable media may be provided, which non-transitory computer readable media have a computer program stored thereon, with the computer program comprising computer program code which is configured, when the computer program is run on a processing system, to cause the processing system to implement the method according to any of the embodiments described herein.

The processing system can be included in a domestic kitchen appliance included in the food preparation apparatus, in a user device, for example a smart phone or tablet computer, separate from such a kitchen appliance, and/or in a cloud-based server.

Embodiments described herein in relation to the food preparation apparatus may be applicable to the method and computer program, embodiments described herein in relation to the method may be applicable to the food preparation apparatus and the computer program, and embodiments described herein in relation to the computer program may be applicable to the food preparation apparatus and the method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a food preparation apparatus according to an example;
FIG. 2 provides a flowchart of a method of determining a thickness of a piece of food;
FIGs. 3A to 3C show three color channels of an image of a piece of food captured while a lighting system is providing a first illumination condition;
FIGs. 4A to 4C show three color channels of an image of the piece of food shown in FIGs. 3A to 3C when the lighting system is providing a second illumination condition different from the first illumination condition;
FIG. 5 provides an image in which a profile of the top surface of the piece of food is identified from the color channel shown in FIG. 3A; and
FIG. 6 provides an image in which an outer profile of the piece of food is identified from the color channel shown in FIG. 4A.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a food preparation apparatus comprising a food supporting region on which a piece of food is supportable, and an image sensor arranged to image the food supporting region from above the food supporting region at an angle that enables image capture of a top surface and a side surface of the piece of food. A lighting system provides a first illumination condition in which the food supporting region is illuminated by the lighting system from a first direction, and a second illumination condition in which the food supporting region is illuminated by the lighting system from a second direction that is different from the first direction. A processing system receives first image data captured by the image sensor when the lighting system is providing the first illumination condition, and receives second image data captured by the image sensor when the lighting system is providing the second illumination condition. The processing system processes the first image data and the second image data to identify a first edge of the piece of food between the top surface and the side surface, and a second edge between the side surface and the food supporting region. The identified first and second edges can then be used to determine a thickness of the piece of food. Further provided is a method for determining a thickness of a piece of food and a related computer program.

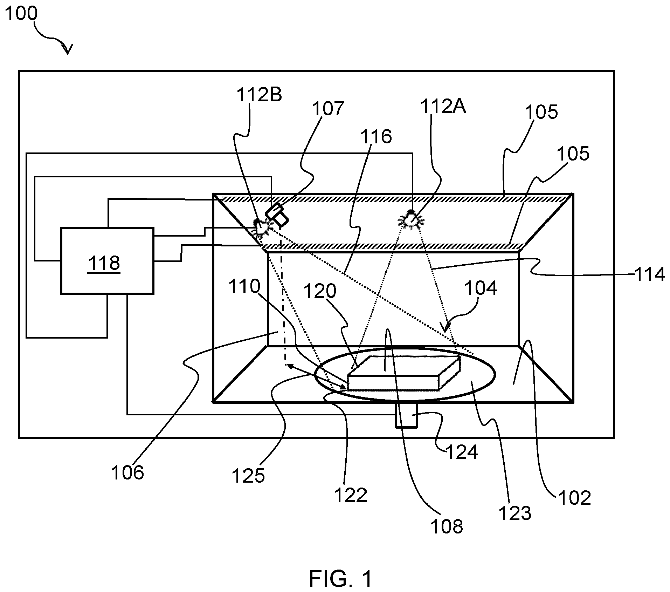

FIG. 1 schematically depicts a food preparation apparatus 100 according to an example. The food preparation apparatus 100 comprises a food supporting region 102 on which a piece of food 104 is supportable.

The food preparation apparatus 100 may be of any suitable type. Particular mention is made of the food preparation apparatus 100 comprising a domestic kitchen appliance, such as a domestic cooking appliance. Non-limiting examples of a domestic cooking appliance include an oven, e.g. a convection oven, and an air fryer.

In some embodiments, such as shown in FIG. 1, the food preparation apparatus 100 comprises one or more heating elements 105, such as resistive heating element(s), for heating the piece of food 104 supported on the food supporting region 102.

Alternatively or additionally, the food preparation apparatus 100 may comprise a food preparation chamber 106. In such embodiments, the food supporting region 102 may support the piece of food 104 within the food preparation chamber 105.

In some embodiments, such as shown in FIG. 1, the food preparation apparatus 100 comprises heating element(s) 105 arranged to heat the food preparation chamber 106.

Whilst not visible in FIG. 1, the food preparation apparatus 100 may include a circulation system for circulating air heated by the heating element(s) 105 in the food preparation chamber 106. Such a circulation system may, for example, include a fan and a fan motor that drives rotation of the fan to circulate the heated air.

Such a circulation system-comprising food preparation apparatus 100 may be applicable to the above-mentioned embodiments in which the food preparation apparatus 100 comprises a domestic cooking appliance, e.g. a domestic cooking appliance in the form of a convection oven or an air fryer.

More generally, and referring again to FIG. 1, an image sensor 107 is arranged to image the food supporting region 102 from above the food supporting region 102 at an angle that enables image capture of a top surface 108 and a side surface 110 of the piece of food 104 supported on the food supporting region 102. This arrangement of the image sensor 107 may assist with determining a thickness of the piece of food 104, as explained in more detail herein below.

A lighting system 112A, 112B provides a first illumination condition 114 in which the food supporting region 102 is illuminated by the lighting system 112A, 112B from a first direction, and a second illumination condition 116 in which the food supporting region 102 is illuminated by the lighting system 112A, 112B from a second direction that is different from the first direction. The dotted lines denoting the first lighting condition 114 and the second lighting condition 116 in FIG. 1 are intended to represent the respective directions of illumination when the first lighting condition 114 is being provided and when the second lighting condition 116 is being provided.

The first lighting condition 114 may be provided by the lighting system 112A, 112B at a different time from when the second lighting condition 116 is provided by the lighting system 112A, 112B.

This may be for the purpose of enabling the image sensor 107 to capture first image data when the first illumination condition 114, rather than the second illumination condition 116, is being provided, and to capture second image data when the second illumination condition 116, rather than the first illumination condition 114, is being provided.

The first image data and the second image data are received by a processing system 118 which processes the first and second image data to identify a first edge 120 of the piece of food 104 between the top surface 108 and the side surface 110, and a second edge 122 between the side surface 110 and the food supporting region 102.

The processing system 118 can be included in a domestic kitchen appliance included in the food preparation apparatus 100, in a user device, for example a smart phone or tablet computer, separate from such a kitchen appliance, and/or in a cloud-based server.

Identification of the first edge 120 and the second edge 122 enables determination of a thickness of the piece of food 104. The thickness determination may be implemented in any suitable manner, for example via a pixel count between respective points, e.g. opposing points, on the identified first and second edges 120, 122, as described in more detail herein below.

The food preparation apparatus 100 accordingly enables the thickness of the piece of food 104 to be determined in a way that minimizes inconvenience to the consumer. This may be due to the consumer being merely required to place the piece of food 104 on the food supporting region 102 because of the thickness determination being implemented automatically via operation of the image sensor 107, the lighting system 112A, 112B, and the processing system 118.

By the food supporting region 102 being illuminated from different directions depending on which of the first lighting condition 114 and the second lighting condition 116 is being provided by the lighting system 112A, 112B, identification of the first and second edges 120, 122 can be facilitated. This may be due to the different illumination directions providing contrast differences between image areas corresponding to the top surface 108 of the piece of food 104, the side surface 110 of the piece of food 104, and/or region(s) of the food supporting region 102 neighboring the piece of food 104.

Less reliance may be placed on, for example, color difference between the top surface 108 and the side surface 110 of the piece of food 104 for identification of the first edge 120. This may assist to make the first edge 120 identification relatively insensitive to food piece type, noting that top and side surfaces 108, 110 of pieces of food 104 can have similar visual appearances which can otherwise make identification of the first edge 120 relatively difficult without employing illumination from different directions (particularly when the piece of food 104 can be freely/randomly placed by the consumer anywhere on the food supporting region 102).

The identification of the first and second edges 120, 122 being facilitated by the first and second illumination conditions 114, 116 may mean that the determination of the thickness of the piece of food 104, using these identified edges 120, 122, is correspondingly assisted.

The lighting system 112A, 112B may be arranged or configured in any suitable manner in order to provide the first and second lighting conditions 114, 116. In some embodiments, such as shown in FIG. 1, the lighting system 112A, 112B comprises a first lighting device 112A arranged to provide the first illumination condition 114, and a second lighting device 112B arranged to provide the second illumination condition 116, with the first and second lighting devices 112A, 112B being distinct from one another. Such distinct/separate lighting devices 112A, 112B may provide a relatively simple way of implementing the first and second illumination conditions 114, 116 provided by the lighting system 112A, 112B.

In other embodiments, the lighting system 112A, 112B may comprise a movable lighting device, e.g. a single movable lighting device, whose position relative to the food supporting region 102 is adjustable to provide either the first illumination condition 114 or the second illumination condition 116.

In some embodiments, such as shown in FIG. 1, a camera assembly 107, 112B includes the image sensor 107 and the second lighting device 112B. Such a camera assembly 107, 112B may facilitate mounting of the image sensor 107 and the second lighting device 112B, for example such that the second lighting device 112B can provide frontlighting of the food supporting region 102.

In such embodiments, the image sensor 107 and the second lighting device 112B may be arranged adjacent to each other in the camera assembly 107, 112B, for example arranged adjacent to each other when integrated in a housing of the camera assembly 107, 112B.

It is noted that the first lighting device 112A may be included in a camera assembly, e.g. provided as an alternative or in addition to the camera assembly 107, 112B.

Should such a camera assembly including the first lighting device 112A be mounted to enable its image sensor to image the food supporting region 102 from the rear of the food supporting region 102, the side surface imaged by this image sensor may be regarded as a back side surface of the piece of food 104, and a front-mounted first lighting device 112A may cause the piece of food 104 to cast a rearwards shadow for assisting edge identification.

In some embodiments, such as shown in FIG. 1, the lighting system 112A, 112B is configured to provide downlighting onto the food supporting region 102 from above the food supporting region 102 when providing the first illumination condition 114. Thus, the lighting system 112A, 112B may be configured to provide more illumination of the top surface 108 than the side surface 110 of the piece of food 104 when the first illumination condition 114 is provided.

This may assist identification of the first edge 120 of the piece of food 104 because of the relatively high contrast between the area of the image corresponding to the top surface 108 and the area of the image corresponding to the side surface 110.

In more general terms, a greater difference in illumination between the top surface 108 and the side surface 110 of the piece of food 104 may be exhibited when the first illumination condition 114 is provided than when the second illumination condition 116 is provided.

In some embodiments, such as shown in FIG. 1, the downlighting onto the food supporting region 102 is provided by the first lighting device 112A arranged above the food supporting region 102.

In some embodiments, the lighting system 112A, 112B, e.g. the first lighting device 112A, is configured to provide the downlighting from above a center of the food supporting region 102, or rearwards of the center away from the image sensor 107. This may result in a shadow of the piece of food 104 increasing contrast between image areas corresponding to the top surface 108 and the side surface 110 of the piece of food 104. In this way, identification of the first edge 120 of the piece of food 104 may be facilitated.

The downlighting may be angled such that light is cast across the food supporting region 102 towards a front of the food supporting region 102 from at or proximal to a rear of the food supporting region 102. Alternatively, the downlighting may be from above the center of the food supporting region 102, as shown in FIG. 1.

It is generally noted that the first illumination condition 114, and thus the first image data, may be employed, in particular, for identification of the first edge 120 of the piece of food 104, as explained in more detail herein below.

In some embodiments, such as shown in FIG. 1, the lighting system 112A, 112B is configured to provide frontlighting of the food supporting region 102 from at or proximal to the front of the food supporting region 102 where the image sensor 107 is arranged when providing the second illumination condition 116.

Whilst the above-described downlighting may assist identification of the first edge 120 of the piece of food 104, the shadow of the piece of food 104 resulting from such downlighting can make the second edge 122 between the side surface 110 and the food supporting region 102 more difficult to identify. This issue may be alleviated by the frontlighting of the food supporting region 102, since the second edge 122 may be less or not obscured by shadow.

In some embodiments, such as shown in FIG. 1, the lighting system 112A, 112B is configured to provide the frontlighting from above the food supporting region 102, in other words from above as well as from at or proximal to the front of the food supporting region 102. The frontlighting may thus be angled such that light is cast downwardly and partly across the food supporting region 102 towards the rear of the food supporting region 102. This angled frontlighting may facilitate identification of the second edge 122.

In some embodiments, such as shown in FIG. 1, the food supporting region 102 comprises a rotatable food support 123 on which the piece of food 104 is supportable, with rotation of the rotatable food support 123 enabling selection of the side surface 110 of the piece of food 104 that is imaged by the image sensor 107.

The rotatable food support 123 may be rotated in various ways. In some embodiments, such as shown in FIG. 1, the rotatable food support 123 is rotated by a motor 124.

Rotation of the food support 123 may, for example, enable selection of a side surface 110 that is suitable, e.g. most representative of the piece of food 104 in terms of its thickness, for the thickness determination.

In some embodiments, the processing system 118 is configured to control rotation of the food support 123, e.g. by controlling the motor 124, to select the side surface 110 of the piece of food 104 that is imaged by the image sensor 107.

Alternatively or additionally, the processing system 118 may be configured to determine a plurality of thicknesses of the piece of food 104, with each of the plurality of thicknesses corresponding to a side surface 110 selected by rotation of the food support 123, e.g. via the processing system 118 controlling the motor 124.

More generally, the processing system 118 may be configured to generate process control data for controlling food preparation functionality of the food preparation apparatus 100 based on the determined thickness, for example based on the determined plurality of thicknesses, of the piece of food 104.

The processing system 118 may be configured to determine the thickness of the piece of food 104 automatically by image analysis and provide a cooking, e.g. roasting, profile according to the determined thickness.

In some embodiments, the processing system 118 is configured to control the heating element(s) 105 based on the determined thickness, for example based on the determined plurality of thicknesses, of the piece of food 104.

Such heating control may, for instance, determine a cooking temperature, e.g. in the food preparation chamber 106, and/or a cooking time for the piece of food 104.

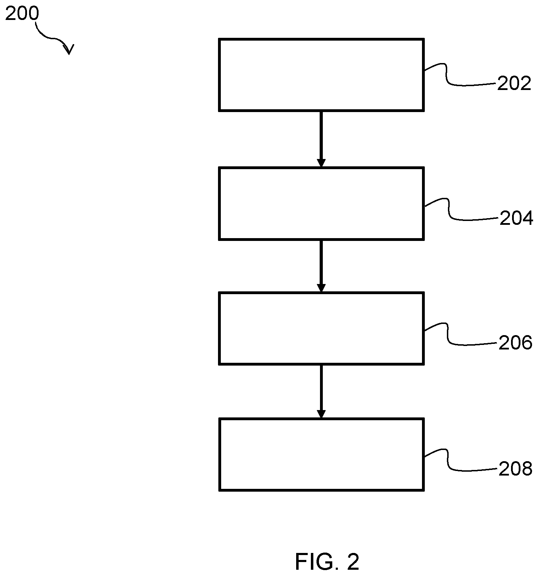

FIG. 2 provides a flowchart of a method 200 for determining a thickness of a piece of food 104 supported on a food supporting region 102 illuminated by a lighting system 112A, 112B that provides a first illumination condition 114 in which the food supporting region 102 is illuminated by the lighting system 112A, 112B from a first direction, and a second illumination condition 116 in which the food supporting region 102 is illuminated by the lighting system 112A, 112B from a second direction that is different from the first direction.

The method 200 may use the food preparation apparatus 100 according to any of the embodiments described above.

A computer program comprising computer program code may be configured, when the computer program is run on a processing system 118, to cause the processing system 118 to implement the method 200 according to any of the embodiments described herein.

In more general terms, the method 200 may be a computer-implemented method 200.

The method 200 comprises receiving 202 first image data captured by the image sensor 107 when the lighting system 112A, 112B is providing the first illumination condition 114, with the image sensor 107 being arranged for image capture of the top surface 108 and the side surface 110 of the piece of food 104.

The lighting system 112A, 112B may provide downlighting onto the food supporting region 102 from above the food supporting region 102 when providing the first illumination condition 114, as previously described.

The method 200 comprises receiving 204 second image data from the image sensor 107 when the lighting system 112A, 112B is providing the second illumination condition 116.

The lighting system 112A, 112B may provide frontlighting of the food supporting region 102 from at or proximal to the front of the food supporting region 102 where the image sensor 107 is arranged when providing the second illumination condition 116, as previously described.

The processing system 118 may receive 202 the first image data in response to the first illumination condition 114 being provided and/or may receive 204 the second image data in response to the second illumination condition 116 being provided.

Alternatively or additionally, the processing system 118 may be configured to control the lighting system 112A, 112B to provide the first illumination condition 114, and receive 202 the first image data when the first illumination condition 114 is being provided; and/or the processing system 118 may be configured to control the lighting system 112A, 112B to provide the second illumination condition 116, and receive 204 the second image data when the second illumination condition 116 is being provided.

The method 200 further comprises processing 206 the first image data and the second image data to identify a first edge 120 of the piece of food 104 between the top surface 108 and the side surface 110, and a second edge 122 between the side surface 110 and the food supporting region 102. The identified first and second edges can then be used to determine 208 the thickness of the piece of food 104.

It is noted, for the avoidance of any doubt, that the method 200 can be implemented in any suitable order, for example with receiving 204 of the second image data being implemented prior to receiving 202 of the first image data.

In some embodiments, the first or second image data may be received 202, 204 and processed to identify one of the first and second edges 120, 122, followed by the second or first image data being received 204, 202 and processed to identify the other of the first and second edges 122, 120.

In some embodiments, the processing 206 of the first image data and the second image data comprises pre-processing the first image data and/or the second image data, with this pre-processing comprising one or more of: removing extraneous image data; converting into a color space; and splitting into color channels, e.g. red (R), green (G), blue (B) color channels, followed by selecting color channel(s) from which the first edge 120 and the second edge 122 are to be identified.

In some embodiments, the processing 206 of the first image data and the second image data comprises identifying an outer profile of the piece of food 104. In such embodiments, the outer profile of the piece of food 104 may be determined, e.g. via image segmentation, using the second image data captured when the lighting system 112A, 112B is providing the second illumination condition 116, for example the frontlighting of the food supporting region 102.

Any suitable image processing technique may be employed to identify the outer profile of the piece of food 104. In some embodiments, the identifying of the outer profile comprises thresholding processing.

In some embodiments, the outer profile of the piece of food 104 is identified using one or more of the above-mentioned color channels, e.g. R, G, B color channels, derived from the second image data.

The processing of the first image data and the second image data may comprise identifying a profile of the top surface 108 of the piece of food 104. In such embodiments, the profile of the top surface 108 may be determined, e.g. via image segmentation, using the first image data captured when the lighting system 112A, 112B is providing the first illumination condition 114, for example the downlighting of the food supporting region 102.

Any suitable image processing technique may be employed to identify the profile of the top surface 108 of the piece of food 104. In some embodiments, the identifying of the profile of the top surface 108 comprises thresholding processing.

In some embodiments, the profile of the top surface 108 of the piece of food 104 is identified using one or more of the above-mentioned color channels, e.g. R, G, B color channels.

In some embodiments, the method 200 comprises comparing the outer profile of the piece of food 104 and the profile of the top surface 108 of the piece of food 104 when determining 208 the thickness of the piece of food 104.

In such embodiments, the comparing may comprise determining a side surface image segment corresponding to the side surface 110.

Alternatively or additionally, the comparing may comprise determining a difference between a coordinate of the profile of the top surface 108 and a coordinate of the outer profile of the piece of food 104.

In some embodiments, the determining 208 the thickness of the piece of food 104 comprises determining a difference between a bottom y-coordinate of the outer profile of the piece of food 104 and a bottom y-coordinate of the profile of the top surface 108 of the piece of food 104.

The determining 208 may comprise determining a largest spacing between the first and second edges 120, 122.

This may, for example, involve identifying a largest circle that fits into an image area corresponding to the side surface 110, with the diameter of this circle corresponding to the thickness, e.g. in terms of a number of pixels, of the piece of food 104.

In some embodiments, and referring again to FIG. 1, the method 200 comprises obtaining a distance 125 along the food supporting region 102 from beneath the image sensor 107 to the side surface 110, and determining 208, using the identified first and second edges 120, 122 and the distance 125, the thickness of the piece of food 104.

The distance 125 may be obtained in any suitable manner. For example, the food supporting region 102 may comprise reference markings to which the side surface 110 of the food, e.g. a point on an image area corresponding to the side surface 110, can be compared in order for the distance 125 between the side surface 110 and the image sensor 107 to be obtained.

The distance 125 from beneath the image sensor 107 to the side surface 110, e.g. to the first edge 120, the second edge 122 or a point midway between the first and second edges 120, 122, may be used to correct a measurement of a spacing, e.g. using a pixel count, between respective points/coordinates on the identified first and second edges 120, 122 for the perspective/angle of the image sensor 107. Thus, a more accurate determination of the thickness of the piece of food 104 may be attainable.

In some embodiments, the determining 208 the thickness of the piece of food 104 comprises performing a perspective correction transformation function to transform a measurement of a spacing between respective points on the identified first and second edges 120, 122 to the thickness of the piece of food 104, with the perspective correction transformation accounting for the distance 125 from beneath the image sensor 107 to the side surface 110, e.g. to the second edge 122. Such a perspective correction transformation function may account for the angle at which the image sensor 107 is arranged to image the food supporting region 102.

The perspective correction transformation function may be regarded as serving to normalize the spacing between respective points on the identified first and second edges 120, 122 to a location, e.g. a pre-stored location, on the food supporting region 102.

It is noted that in embodiments in which the largest spacing between the first and second edges 120, 122 is used for the thickness determination 208, a coordinate (x, y) of the lowest point used to determine the spacing may be employed for performing the perspective correction transformation function.

Whilst not visible in FIG. 2, the method 200 may comprise controlling rotation of the food support 123 to select the side surface 110 of the piece of food 104 that is imaged by the image sensor 107.

Alternatively or additionally, the method 200 may comprise determining 208 a plurality of thicknesses of the piece of food 104, with each of the plurality of thicknesses corresponding to a side surface 110 selected by rotation of the food support 123, e.g. automatically selected by the processing system 118 controlling rotation of the food support 123.

In some embodiments, the method 200 comprises generating process control data for controlling food preparation functionality of the food preparation apparatus 100 based on the determined thickness, for example based on the determined plurality of thicknesses.

The method 200 may comprise determining the thickness of the piece of food 104 automatically by image analysis and providing a cooking, e.g. roasting, profile according to the determined thickness.

In some embodiments, the method 200 comprises controlling heating element(s) 105 included in the food preparation apparatus 100 based on the determined thickness, for example based on the determined plurality of thicknesses, of the piece of food 104.

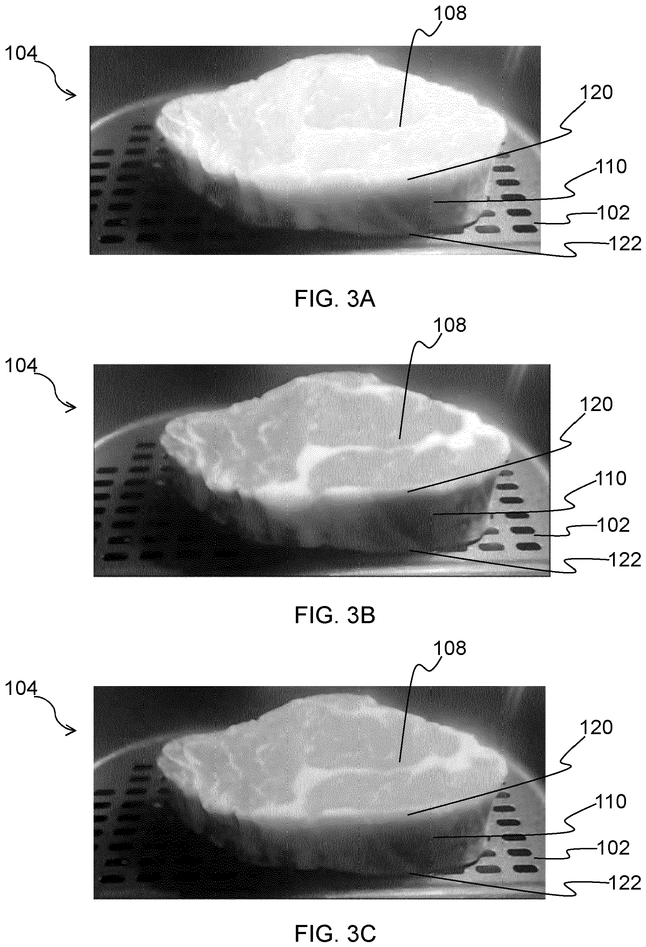

Referring to FIGs. 3A to 3C, a piece of food 104 in the form of a beef steak is shown as an illustrative non-limiting example. The piece of food 104 is illuminated by the lighting system 112A, 112B providing the first illumination condition 114, in this case in the form of downlighting provided by the above-described first lighting device 112A. The resulting shadow cast by the piece of food 104 evidently increases contrast between image areas corresponding to the top surface 108 and the side surface 110 of the piece of food 104. Thus, identification of the first edge 120 of the piece of food 104 may be facilitated, as previously described.

It is noted that FIGs. 3A to 3C show different color channels into which the first image data has been split, with FIG. 3A showing the R channel, FIG. 3B showing the G channel, and FIG. 3C showing the B channel. In this non-limiting example, the R channel provided the greatest contrast between image areas corresponding to the top surface 108 and the side surface 110 of the piece of food 104, and hence this channel was selected for subsequent steps of the processing 206.

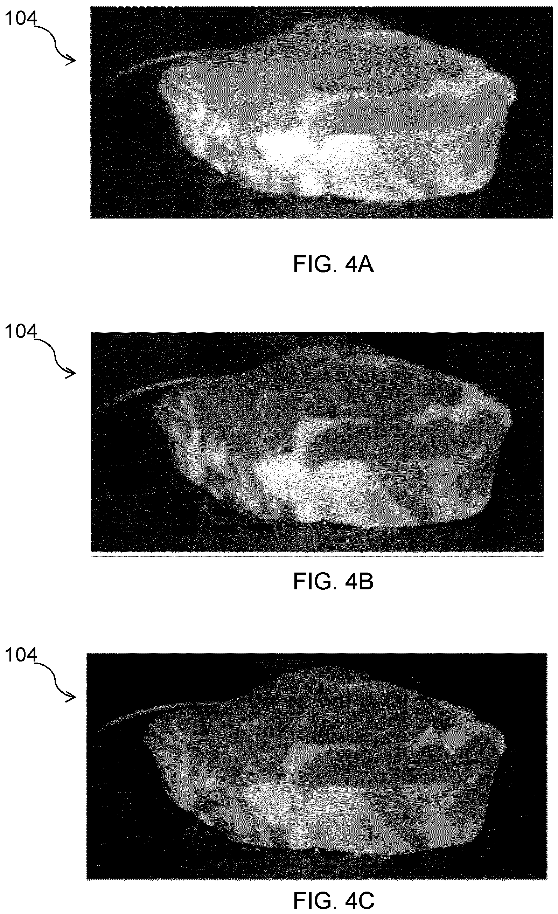

Whilst the downlighting may assist identification of the first edge 120 of the piece of food 104, it is evident from FIGs. 3A to 3C that the shadow cast by the piece of food 104 resulting from such downlighting can make the second edge 122 between the side surface 110 and the food supporting region 102 more difficult to identify. However, and referring now to FIGs. 4A to 4C, this issue may be alleviated by the frontlighting of the food supporting region 102, since the second edge 122 may be less or not obscured by shadow. This frontlighting corresponds to the second illumination condition 116, which in this particular example is provided by the above-described second lighting device 112B.

It is noted that FIGs. 4A to 4C show different color channels into which the second image data has been split, with FIG. 4A showing the R channel, FIG. 4B showing the G channel, and FIG. 4C showing the B channel.

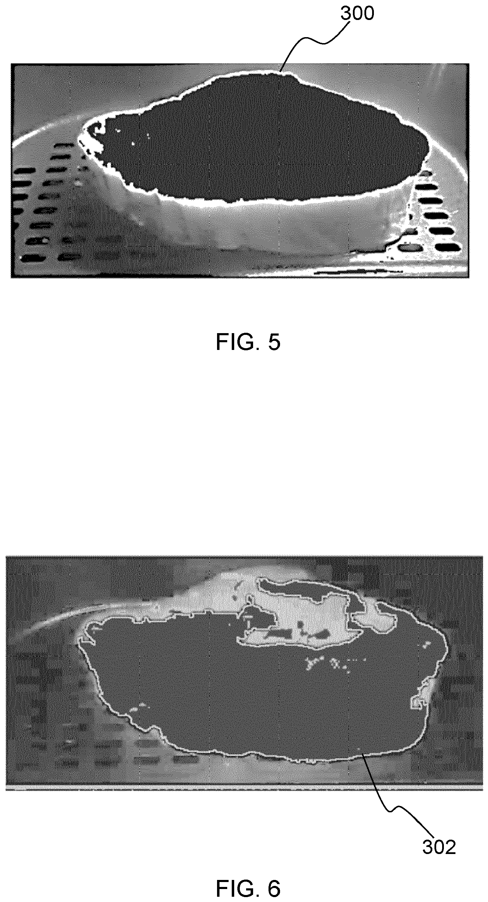

FIG. 5 shows a profile 300 of the top surface 108 of the piece of food 104 as determined, via image segmentation, using first image data corresponding to the image shown in FIG. 3A, in other words the R channel image. In particular, thresholding processing was used to determine the profile 300 of the top surface 108 of the piece of food 104.

FIG. 6 shows an outer profile 302 of the piece of food 104 as determined, via image segmentation, using second image data corresponding to the image shown in FIG. 4A, in other words the R channel image. In particular, thresholding processing was used to determine the outer profile 302 of the piece of food 104.

In a non-limiting example, the thickness of the piece of food 104 was determined by subtracting a bottom y-coordinate of two bounding boxes 300, 302 corresponding to the segmented top surface 108 and side surface 110 of the piece of food 104. This calculation is presented in Table 1.

**Table 1**

| | Y-coordinate in the image | Thickness (pixel) |
|---|---|---|
| Bottom edge 120 of top surface bounding box 300 | 151 | 207-151=56 |
| Bottom edge 122 of whole food bounding box 302 | 207 | |

In this non-limiting example, the y-coordinate (151) of the bottom edge 120 of the top surface bounding box 300 was used to calibrate the thickness (56 pixels) to a real thickness, taking into account the impact of visual perspective by a mathematical perspective transformation function that uses a pre-stored location/reference position of the side surface 110. In this case, the thickness of the piece of food 104 (beef steak) was about 2.9 cm.

In summary, the present disclosure provides a computer vision method 200 to automatically identify the thickness of food 104, e.g. when the piece of food 104 is put into a kitchen appliance having an integrated image sensor/camera 107.

A front side 110 of the food 104 may be segmented and a location identified that could represent the thickness of the food 104 at the front side 119. This thickness and location of the thickness may then be used as input to a perspective correction transformation function/model to normalize the thickness to a pre-stored location on the food supporting region 102 and/or in the kitchen appliance's food preparation chamber 106.

To increase the visual difference between the food's 104 front side 110 and top surface 108, and between the food 104 and the food supporting region 102, e.g. roasting basket, a lighting system 112A, 112B that illuminates the food supporting region 102 from different directions is employed. For example, at least two lamps/camera are mounted in the food preparation apparatus 100.

One lighting condition 116 may assist the food 104 to be segmented from the background, for instance to assist the bottom edge 122 of the food 104 to be segmented from the food supporting region 102, e.g. baking basket. Another lighting condition 114 may create shadow to the front side 110 of the food 104 and hence enable the top surface 108 to be segmented from the front side 110 of the food 104.

Two images may be captured: one for the first lighting condition 114 and one for the second lighting condition 116.

Pre-processing of the two images may be implemented, such as trimming unnecessary area(s) in the images, converting the images into suitable color space if necessary and/or splitting them into suitable color channels and selecting the suitable color channel for subsequent image processing.

A segmentation operation may be performed on the two images, with one of the operations segmenting the full piece of food 104 from the food supporting region 102 and/or the food preparation chamber 106, and another operation segmenting the food's 104 top surface 108 from the front side 110.

A pixel height/spacing may be determined by calculating the difference between a position of a top edge 120 and a bottom edge 122 of the front side 110 of the food 104. This may, for example, involve finding a maximum internal circle of the food's 104 front side 110, with the diameter of this circle corresponding to a thickness, e.g. in terms of a number of pixels, of the food 104.

The position of the food 104 where the thickness is calculated may be obtained and used, via a perspective correction transformation function (mathematical model), to calculate the thickness relevant to a pre-stored position to correct the pixel-calculated thickness for the perspective of the image sensor 107/camera.

To further facilitate the consumer wishing to put food 104 randomly on the food supporting region 102, e.g. roasting basket, a rotating food support 123, e.g. a rotating plate, could be mounted in the food supporting region 102, and the system may control rotation of the food support 123, e.g. to select a front side 110 suitable for the thickness determination.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

The term "food preparation system" may be used to refer to the food preparation apparatus.

Any reference signs in the claims should not be construed as limiting the scope.

## Claims

1. A food preparation apparatus (100) comprising:
a food supporting region (102) on which a piece of food (104) is supportable;
an image sensor (107) arranged to image the food supporting region from above the food supporting region at an angle that enables image capture of a top surface (108) and a side surface (110) of the piece of food;
a lighting system (112A, 112B) configured to provide a first illumination condition (114) in which the food supporting region is illuminated by the lighting system from a first direction, and a second illumination condition (116) in which the food supporting region is illuminated by the lighting system from a second direction that is different from the first direction; and
a processing system (118) configured to:
receive first image data captured by the image sensor when the lighting system is providing the first illumination condition;
receive second image data captured by the image sensor when the lighting system is providing the second illumination condition;
process the first image data and the second image data to identify a first edge (120) of the piece of food between the top surface and the side surface, and a second edge (122) between the side surface and the food supporting region; and
determine, using the identified first and second edges, a thickness of the piece of food.

2. The food preparation apparatus (100) according to claim 1, wherein the lighting system (112A, 112B) is configured to provide downlighting onto the food supporting region (102) from above the food supporting region when providing the first illumination condition (114).

3. The food preparation apparatus (100) according to claim 2, wherein the lighting system (112A, 112B) is configured to provide the downlighting from above a center of the food supporting region (102) or rearwards of the center away from the image sensor (107).

4. The food preparation apparatus (100) according to any one of claims 1 to 3, wherein the lighting system (112A, 112B) is configured to provide frontlighting of the food supporting region (102) from at or proximal to a front of the food supporting region where the image sensor (107) is arranged when providing the second illumination condition (116).

5. The food preparation apparatus (100) according to claim 4, wherein the lighting system (112A, 112B) is configured to provide the frontlighting from above the food supporting region (102).

6. The food preparation apparatus (100) according to any one of claims 1 to 5, wherein the lighting system (112A, 112B) comprises a first lighting device (112A) arranged to provide the first illumination condition (114), and a second lighting device (112B) arranged to provide the second illumination condition (116), the first and second lighting devices being distinct from one another.

7. The food preparation apparatus (100) according to claim 6, comprising a camera assembly (107, 112B) that includes the image sensor (107) and the second lighting device (112B).

8. The food preparation apparatus (100) according to any one of claims 1 to 7, wherein the processing system (118) is configured such that the processing of the first image data and the second image data comprises identifying an outer profile (302) of the piece of food (104).

9. The food preparation apparatus (100) according to any one of claims 1 to 8, wherein the processing system (118) is configured such that the processing of the first image data and the second image data comprises identifying a profile (300) of the top surface (108) of the piece of food (104).

10. The food preparation apparatus (100) according to claim 9 as according to claim 8, wherein the processing system (118) is configured to compare the outer profile (302) of the piece of food (104) and the profile (300) of the top surface (108) of the piece of food when determining the thickness of the piece of food.

11. The food preparation apparatus (100) according to any one of claims 1 to 10, wherein the processing system (118) is configured to:
obtain a distance (125) along the food supporting region (102) from beneath the image sensor (107) to the side surface (110); and
determine, using the identified first and second edges and the distance, the thickness of the piece of food.

12. The food preparation apparatus (100) according to any one of claims 1 to 11, wherein the food supporting region (102) comprises a rotatable food support (123) on which the piece of food (104) is supportable, rotation of the rotatable food support enabling selection of the side surface (110) of the piece of food that is imaged by the image sensor (107).

13. The food preparation apparatus (100) according to claim 12, wherein the processing system (118) is configured to control rotation of the food support (123) to select the side surface (110) of the piece of food (104) that is imaged by the image sensor (107).

14. A method (200) for determining a thickness of a piece of food (104) supported on a food supporting region (102) illuminated by a lighting system (112A, 112B) that provides a first illumination condition (114) in which the food supporting region is illuminated by the lighting system from a first direction, and a second illumination condition (116) in which the food supporting region is illuminated by the lighting system from a second direction that is different from the first direction, the method comprising:
receiving (202) first image data captured by an image sensor (107) when the lighting system is providing the first illumination condition, the image sensor being arranged for image capture of a top surface (108) and a side surface (110) of the piece of food;
receiving (204) second image data from the image sensor when the lighting system is providing the second illumination condition;
processing (206) the first image data and the second image data to identify a first edge (120) of the piece of food between the top surface and the side surface, and a second edge (122) between the side surface and the food supporting region; and
determining (208), using the identified first and second edges, the thickness of the piece of food.

15. A computer program comprising computer program code which is configured, when said computer program is run on a processing system (118), to cause said processing system to implement the method (200) of claim 14.
